# FASCICULE DE BREVET EUROPEEN

(11) **EP 3 655 263 B1**
(45) Date de publication et mention de la délivrance du brevet: **09.08.2023**
(21) Numéro de dépôt: 18749003.2
(22) Date de dépôt: 26.06.2018
(51) Int. Cl.: B60C 11/00, B60C 11/03, B60C 11/13

(54) **PNEUMATIQUE A SOUS-COUCHE DE BANDE DE ROULEMENT AFFLEURANTE EN FOND DE SILLON ET ELEMENTS DE RENFORCEMENT EN CAOUTCHOUC DE HAUT MODULE INTEGRES A LA BANDE DE ROULEMENT**
REIFEN MIT EINER MIT DEM RILLENGRUND BÜNDIG ABSCHLIESSENDEN LAUFFLÄCHENUNTERSCHICHT UND IN DIE LAUFFLÄCHE INTEGRIERTEN VERSTÄRKUNGSELEMENTEN AUS HOCHMODULKAUTSCHUK
TYRE HAVING TREAD SUB-LAYER FLUSH WITH THE GROOVE BOTTOM AND REINFORCING ELEMENTS MADE OF HIGH MODULUS RUBBER INTEGRATED INTO THE TREAD

(30) Priorité: 17.07.2017 FR 1756734
(43) Date de publication de la demande: 27.05.2020
(73) Titulaire: Compagnie Générale des Etablissements Michelin, 63000 Clermont-Ferrand (FR)
(72) Inventeur: CAREME, Christopher, 63040 Clermont-Ferrand Cedex 9 (FR); PROST, Pascal, 63040 Clermont-Ferrand Cedex 9 (FR)
(74) Mandataire: Desbordes, Guillaume
(86) Numéro de dépôt international: PCT/FR2018/051547
(87) Numéro de publication internationale: WO 2019/016440

(56) Documents cités:
- FR-A1- 3 010 002
- FR-A3- 3 043 017

## Description

### Domaine de l'invention

La présente invention est relative aux pneumatiques, et plus particulièrement à un pneumatique dont les performances en matière de résistance au roulement et comportement routier sont améliorées.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan équatorial CP est un plan perpendiculaire à l'axe de révolution du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan équatorial du pneumatique, selon la direction axiale ».

### État de la technique

Comme on le sait, les pneumatiques pour applications routières, et tout particulièrement les pneumatiques pour véhicules de tourisme, apportent une contribution essentielle aux performances des véhicules en matière de résistance ou roulement (et donc d'efficacité énergétique des véhicules), d'adhérence, de réponse dynamique pour le guidage des véhicules (notamment en virage) et d'usure (et donc de coût global d'utilisation des véhicules). Parmi les paramètres de conception des pneumatiques, l'homme du métier connait l'importance du choix du matériau constitutif de la bande de roulement et du matériau constitutif de la sous-couche. Un exemple de sous-couche, c'est-à-dire de couche de caoutchouc insérée entre l'armature de sommet et le matériau de la bande de roulement, est décrit dans le document FR 2 954 333. Un autre exemple où cette fois le matériau constitutif de la sous-couche est affleurant au fond des sillons de la bande de roulement est donné par le document EP 2 865 543. En général, on utilise des matériaux de sous-couche sous la bande de roulement de manière à améliorer la résistance au roulement du pneumatique avec un matériau peu hystérétique, ou encore pour rigidifier la bande de roulement en cisaillement, mais avec des rigidités modestes pour ne pas trop s'opposer à la mise à plat de la bande de roulement du pneumatique dans l'aire de contact avec le sol. L'état de la technique connait aussi, par les document FR 3 010 002 et FR 3 043 017, un pneumatique dont la partie destinée à être usée de bande de roulement comporte des matériaux différents.

Cependant, plus la rigidité est faible, moins bonne est la réponse en poussée de dérive du pneumatique sur sollicitation de braquage du véhicule. En effet, de façon schématique, on peut considérer que l'empilage de couches de caoutchouc radialement à l'extérieur de l'armature de sommet comme une succession de ressorts en série. C'est pourquoi on évite d'introduire des matériaux de trop faible module pour ne pas pénaliser la rigidité de dérive. Or ceci peut être contraire à l'objectif de minimiser la résistance au roulement. Même dans les variantes de rigidités les plus élevées, le module dynamique de cisaillement G* d'un matériau de sous-couche est en général très inférieur à 8 MPa, même lorsque l'on recherche les meilleures performances en comportement. Dans le présent mémoire, précisons que le module dynamique de cisaillement G* considéré est le module dynamique de cisaillement G* mesuré à 23°C, et sous une contrainte de cisaillement alterné à une fréquence de 10 Hz et à 10% de déformation.

Par le document WO 2015/170615, on connait aussi un pneumatique comportant une couche de base, c'est-à-dire une sous-couche, formée par deux matériaux superposés radialement. Le module du matériau de la bande de roulement et la valeur de tg δ (tangente delta) de celui-ci sont inférieurs aux valeurs des mêmes paramètres du matériau de sous-couche en contact avec le matériau de bande de roulement, c'est-à-dire de celle des deux couches la plus à l'extérieur radialement. Le module du matériau de la couche radialement intérieure des matériaux de sous-couche et la valeur de tg δ de celui-ci sont inférieurs aux valeurs des mêmes paramètres du matériau de sous-couche en contact avec le matériau de bande de roulement. Cependant, un pneumatique réalisé selon cet enseignement n'apporte pas de progrès dans l'équilibre de performances.

Pour apporter une amélioration de performances globales en cas d'utilisation de mélanges caoutchouteux de bande de roulement de basse rigidité, le document WO2016/174100 propose d'utiliser un mélange caoutchouteux de bande de roulement de faible dureté et de renforcer la bande de roulement en y incluant un ou plusieurs renforcement circonférentiels ayant une forme triangulaire, vue en coupe méridienne, ledit triangle ayant sa pointe orientée radialement vers l'extérieur.

La multiplicité de ces propositions et leur grande diversité indiquent qu'il n'est pas simple d'atteindre un bon équilibre de toutes les performances attendues d'un pneumatique et notamment de concilier une excellente adhérence permettant un équipement de véhicules à caractère sportif, une faible résistance au roulement et faible usure afin de préserver les ressources en matériau et en énergie, et ceci sans dégrader le bruit engendré par le pneumatique, ce qui est un paramètre de confort et de faible nuisance pour l'environnement d'importance croissante.

L'invention a pour objectif d'apporter une meilleure réponse dynamique en poussée de dérive sur sollicitation de braquage sans dégrader ni la résistance au roulement du pneumatique ni le bruit engendré par le pneumatique.

### Description brève de l'invention

L'invention a pour objet un pneumatique ayant un axe de rotation et un plan médian perpendiculaire à l'axe de rotation, et comprenant :
- une armature de sommet,
- une bande de roulement radialement à l'extérieur de l'armature de sommet, et axialement entre deux épaules, la bande de roulement comprenant une face de contact destinée à venir en contact avec la chaussée pendant le roulage du pneumatique, la bande de roulement comportant des blocs de sculptures séparés par une pluralité de sillons orientés essentiellement circonférentiellement, chaque sillon présentant un fond de sillon, la bande de roulement étant constituée majoritairement par au moins un mélange caoutchouteux de rigidité M donnée,
- une sous-couche disposée radialement extérieurement à l'armature de sommet et radialement intérieurement à la bande de roulement, la sous-couche affleurant à chaque fond de sillon, la sous-couche étant constituée par au moins un mélange caoutchouteux de rigidité A donnée,
caractérisé en ce que, d'un côté au moins axialement par rapport au plan médian, :
- chacun des sillons est bordé axialement de part et d'autre par un élément renforçant s'étendant radialement depuis la sous-couche vers l'extérieur de la bande de roulement jusqu'à une hauteur radiale supérieure à 75% de l'épaisseur radiale de la bande de roulement, ledit élément renforçant étant de largeur axiale variable, depuis une valeur maximale inférieure à 30% de la largeur axiale dudit bloc de sculpture, ladite largeur axiale allant en décroissant lorsque l'on se déplace radialement vers l'extérieur, chaque élément renforçant étant constituée par un mélange caoutchouteux de rigidité B donnée,
- une couche de recouvrement est disposée radialement sur la sous-couche et axialement recouvrant la sous-couche entre les éléments renforçant en dehors des sillons, et respectivement entre un élément renforçant et l'épaule, ladite couche de recouvrement étant constituée par le même matériau que le matériau des éléments renforçants,
- les rigidités obéissant aux inégalités suivantes : A < M < B.

De préférence, la bande de roulement est constituée par au moins 66% dudit mélange caoutchouteux majoritaire en volume. De préférence, le mélange caoutchouteux de la bande de roulement a un module dynamique de cisaillement G* inférieur à 4,0 MPa et avantageusement inférieur à 2,5 MPa.

De préférence, le module dynamique de cisaillement G* du matériau de la sous-couche est inférieur à 1,5 MPa, et avantageusement inférieur à 0,5 MPa ; de préférence la valeur de tg δ mesurée à 23°C à 10 Hz et sous une déformation de cisaillement alterné de 10% du matériau de la sous-couche est inférieure à 0,3.

De façon avantageuse, la sous-couche est réalisée en deux matériaux différents. Dans ce cas, par exemple, l'un des matériaux est disposé axialement vers l'extérieur du pneumatique et l'autre des matériaux est disposé axialement au centre, le module dynamique de cisaillement G* du matériau de la sous-couche disposé axialement vers l'extérieur étant inférieur d'au moins 1 MPa par rapport au module dynamique de cisaillement G* du matériau de la sous-couche disposé axialement au centre. Toujours dans le cas de deux matériaux différents pour la sous-couche et dans un autre exemple, l'un des matériaux est disposé axialement sous les fonds de sillon et l'autre des matériaux est interposé axialement entre les fonds de sillon, en alternance avec le premier cité ; le module dynamique de cisaillement G* du matériau de la sous-couche disposé axialement sous les fonds de sillons est de préférence inférieur d'au moins 1 MPa par rapport au module dynamique de cisaillement G* de l'autre des matériaux.

De préférence, lorsque l'on utilise deux matériaux différents pour la sous-couche, l'un de ceux-ci présente une valeur de tg δ mesurée à 23°C à 10 Hz et sous une déformation de cisaillement alterné de 10% inférieure de 0,5 par rapport à l'autre.

Dans une mise en oeuvre avantageuse de l'invention, le module dynamique de cisaillement G* du matériau de la couche de recouvrement et des éléments renforçants est supérieur à 7 MPa, et de préférence supérieur à 12 MPa ; de façon très avantageuse, le module dynamique de cisaillement G* de ce matériau a une valeur supérieure à 20 MPa.

### Description des Figures

L'invention est maintenant décrite à l'aide du dessin annexé dans lequel :
- la figure 1 montre une coupe méridienne partielle et schématique d'un pneumatique conforme à un premier mode de réalisation de l'invention ;
- la figure 2 montre une coupe méridienne partielle et schématique d'un pneumatique conforme à un deuxième mode de réalisation de l'invention ;
- la figure 3 montre une coupe méridienne partielle et schématique d'un pneumatique conforme à un troisième de réalisation de l'invention.

### Description détaillée de l'invention

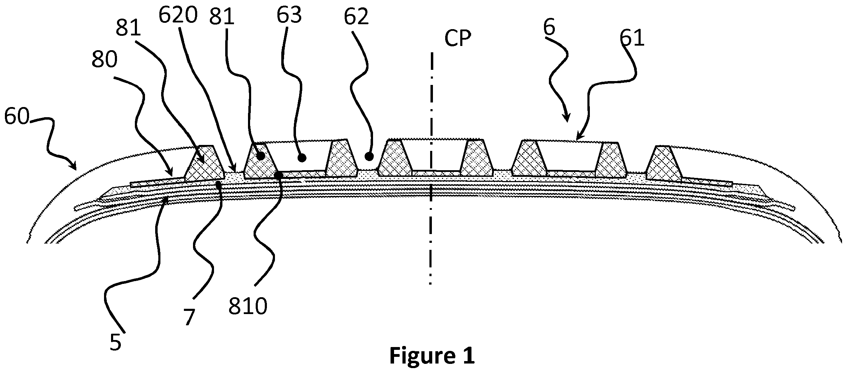

On voit à la figure 1 un pneumatique, un plan équatorial CP, une armature de sommet 5 et une bande de roulement 6. La bande de roulement s'étend axialement d'une épaule 60 à l'autre épaule. La bande de roulement comprend une face de contact 61 destinée à venir en contact avec la chaussée pendant le roulage du pneumatique. La bande de roulement 6 comporte des blocs de sculpture 63 séparés par des sillons 62 orientés essentiellement circonférentiellement. Chaque sillon 62 est délimité radialement vers l'intérieur par un fond de sillon 620. Le sommet comporte aussi une sous-couche 7 disposée radialement extérieurement à l'armature de sommet 5 et radialement intérieurement à la bande de roulement 6. On voit aussi que le le matériau de la sous-couche 7 apparait dans le fond de rainure 620.

La sous-couche 7 est disposée radialement directement sur l'armature de sommet 5. Comme connu en soi, l'armature de sommet comporte des couches de câbles ou de renforts mono-filamentaires en général enrobés d'une mince couche de caoutchouc. Dans le contexte de la présente invention, par la précision que la sous-couche 7 est disposée radialement directement sur l'armature de sommet 5, on indique qu'elle est en contact avec les câbles ou renforts, compte non tenu de leur enrobage de caoutchouc. On voit que la sous-couche 7 est disposée axialement entre les épaules 60.

On voit également une couche de recouvrement 80 disposée radialement sur la sous-couche 7 et radialement à l'intérieur de la bande de roulement 6. De part et d'autre, axialement, de chacun des sillons 62, on trouve un élément renforçant 81 en forme de coin (vu en coupe méridienne). Cet élément renforçant 81 s'étend radialement de la surface radialement extérieure de la sous-couche 7 vers l'extérieur de la bande de roulement 6 jusqu'à une hauteur radiale supérieure à 75% de l'épaisseur radiale de la bande de roulement. Ledit élément renforçant 81 est de largeur axiale variable, depuis une valeur maximale inférieure à 50% de la largeur axiale dudit bloc de sculpture, ladite largeur axiale allant en décroissant lorsque l'on se déplace radialement vers l'extérieur. L'angle formé en section radiale par les deux parois latérales dudit élément renforçant 81 est de préférence compris entre 10° et 50° degrés, soit par exemple 40°, comme illustré aux figures. Chaque élément renforçant est constitué du même mélange caoutchouteux que la couche de recouvrement 80, ce qui permet de les extruder en une seule et même opération avec la couche de recouvrement 80. Notons encore que la couche de recouvrement 80 s'étend axialement d'un élément renforçant 81 à l'autre pour ceux des blocs de sculpture compris entre deux sillons 62, et s'étend axialement d'un élément renforçant 81 vers l'épaule 60, recouvrant sensiblement en totalité la sous-couche 7, pour les blocs de sculpture situés aux extrémités axiales de la bande de roulement. Enfin, rappelons que selon l'une des caractéristiques de la présente invention, la sous-couche 7 est affleurante dans chaque fond de sillon 620 ; ainsi, c'est le matériau des éléments renforçants 81 qui apparait en parois latérales de chaque sillon 62, et c'est le matériau de sous-couche qui apparait en fond de sillon 620.

Abordons maintenant les matériaux utilisés pour la sous-couche 7. Pour les caractériser, on utilise le module dynamique de cisaillement G* mesuré à 23°C, et sous une contrainte de cisaillement alterné à une fréquence de 10 Hz et à 10% de déformation. De façon avantageuse, le matériau de la sous-couche 7 est caractérisé par un module dynamique de cisaillement G* strictement inférieur à 1,5 MPa et de préférence encore inférieur à 0,5 MPa et même idéalement inférieur à 0,3 MPa. De cette façon, on emploie un matériau ayant une hystérèse très faible pour diminuer la résistance au roulement du pneumatique. Cette hystérèse est caractérisée par la valeur de tg δ mesurée à 23°C à 10 Hz et sous une déformation de cisaillement alterné de 10%. De préférence, cette valeur est de l'ordre de 0,05. Ainsi, le module dynamique de cisaillement plus faible de ce matériau et sa plus faible tg δ permettent de réduire encore les pertes hystérétiques à la faveur d'une moindre résistance au roulement.

Un exemple de formulation appropriée pour le matériau de la sous-couche 7, de module dynamique de cisaillement G* valant 2,0 MPa est le suivant :

**Tableau 1**

| composant | pce |
|---|---|
| NR | 60 |
| BR | 40 |
| N683 | 55 |
| 6PPD | 1,5 |
| Acide stéarique | 0,5 |
| CBS | 1,5 |
| soufre insol 20H | 3 |
| ZnO | 3 |

Les formulations sont données en masse (pce signifiant pourcentage de la masse d'élastomère)

Quant à la couche de recouvrement 80 et les éléments renforçants 81, de préférence, leur matériau est caractérisé par un module dynamique de cisaillement G* supérieur à 12 MPa. De cette façon, on parvient à une bonne rigidité de dérive et on obtient un excellent compromis de performances conciliant une poussée de dérive apte à procurer au pneumatique une bonne réponse dynamique et une excellente résistance au roulement. De façon avantageuse, la valeur de tg δ mesurée à 23°C à 10 Hz et sous une déformation de cisaillement alterné de 10% de ce matériau est inférieure à 0,15.

Un exemple de formulation appropriée pour le matériau de la couche de recouvrement 80 et les coins est donné par le tableau 1 de la demande de brevet WO2016/174100 précitée. Signalons au passage que, comme bien connu de l'homme de métier, les paramètres descriptifs des performances des mélanges de caoutchouc, comme le module dynamique de cisaillement G^{∗} ou tg δ à même formulation, ont des valeurs qui sont aussi fonction de la loi de vulcanisation.

Quant au matériau de la bande de roulement, on peut utiliser un mélange caoutchouteux dans une très large plage de module dynamique de cisaillement G^{∗} ; avantageusement, ledit module dynamique de cisaillement G^{∗} est inférieur à 2,5 MPa.

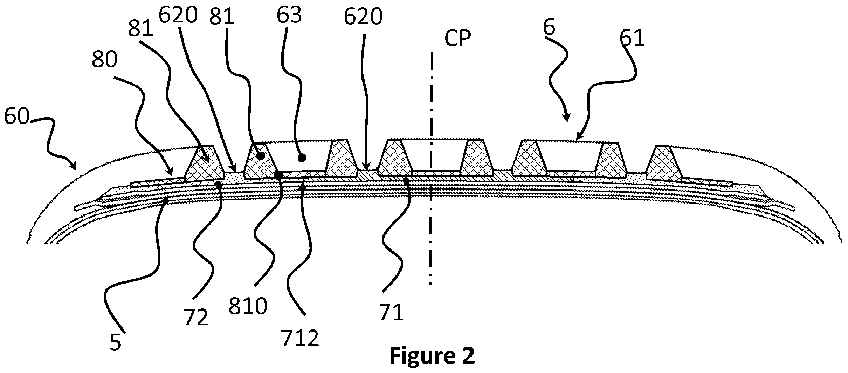

A la figure 2, est illustré un deuxième mode de réalisation dans lequel la sous-couche est formée par une première couche de base 71 et une deuxième couche de base 72. La première couche de base 71 est disposée axialement entre le plan médian CP et un bord de transition 712 ; le bord de transition 712 est situé axialement entre le plan médian CP et une épaule 60 ; dans ce mode de réalisation, le bord de transition 712 est unique dans chacune des moitiés axiales de part et d'autre du plan CP. La deuxième couche de base 72 est disposée axialement entre le bord de transition 712 et une épaule 60. Pour le reste, ce mode de réalisation est identique au premier mode de réalisation.

Soulignons que la rigidité A1 du matériau de la première couche de base 71 est supérieure à la rigidité A2 du matériau de la deuxième couche de base 72. Bien entendu, il pourrait y avoir plus de deux matériaux différents et donc deux ou plusieurs bord de transition ou même la variation de rigidité peut être progressive, s'abaissant en allant axialement du centre vers les épaules.

Un exemple de formulation appropriée pour le matériau de la première couche de base 71, de module dynamique de cisaillement G* valant 2,0 MPa est le suivant :

**Tableau 2**

| composant | pce |
|---|---|
| NR | 60 |
| BR | 40 |
| N683 | 55 |
| 6PPD | 1,5 |
| Acide stéarique | 0,5 |
| CBS | 1,5 |
| soufre insol 20H | 3 |
| ZnO | 3 |

Les formulations sont données en masse (pce signifiant pourcentage de la masse d'élastomère)

Un exemple de formulation appropriée pour le matériau de la deuxième couche de base 72, de module dynamique de cisaillement G^{∗} valant 0,2 MPa est le suivant :

**Tableau 3**

| composant | pce |
|---|---|
| NR | 100 |
| Noir de carbonne | 4 |
| 6PPD | 2,2 |
| DPG | 2,1 |
| Acide Stearique | 3 |
| ZnO | 1,5 |
| Résine | 29,3 |
| HTO | 38 |
| CBS | 1,4 |
| Soufre | 1,6 |

Les formulations sont données en masse (pce signifiant pourcentage de la masse d'élastomère).

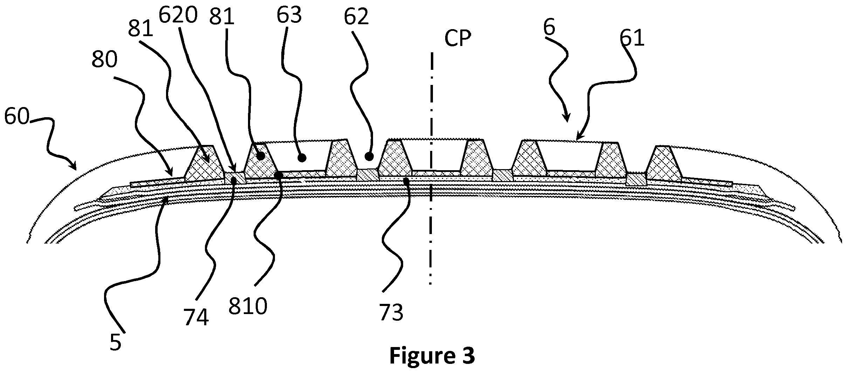

A la figure 3, est illustré un troisième mode de réalisation dans lequel la sous-couche est formée par plusieurs tronçons 73 tous réalisés du même matériaux que ce qui est exposé ci-dessus pour la sous-couche 7 du premier mode de réalisation, avec interposition d'un tronçons 74 en sous-creux, disposés radialement entre l'armature de sommet 5 et le fond 620 de sillon, et axialement en regard de chacun des sillons 62. Le matériau des tronçons 73 est le même que le matériau des premières couches de base 71 et le matériau des tronçons 74 est le même que le matériau des secondes couches de base 72.

On a exposé des exemples de pneumatiques axialement symétriques. Mais soulignons que l'on obtient des résultats déjà fort intéressants si seulement la moitié axiale du pneumatique qui sera montée vers l'extérieur du véhicule est conçue comme expliqué ci-dessus. L'homme du métier, concepteur de pneumatiques, pourra adopter des variantes de réalisations, par exemple des variantes dans lesquelles la bande de roulement elle-même comporte plusieurs matériaux différents, superposés radialement et/ou juxtaposés axialement.

### Essais

On a utilisé comme témoin un pneumatique R ayant une bande de roulement réalisée avec un mélange dont le module dynamique de cisaillement G^{∗} vaut 3,0 MPa, et une sous-couche mono-matériau allant axialement d'une épaule à l'autre du pneumatique, et d'épaisseur radialement sensiblement constante ; vue en section radiale, le profil de cette sous-couche est le même que le profil de l'ensemble de la sous-couche 7 ; cette sous-couche est formée par un mélange présentant un module dynamique de cisaillement G^{∗} vallant 2,0 MPa ; le pneumatique R ne comporte ni couche de recouvrement ni éléments renforçants. Un premier pneumatique de test T1 est conforme à l'exemple de l'invention illustré avec la figure 1, et utilisant les matériaux cités comme exemple ci-dessus. Un deuxième pneumatique de test T2 est conforme à l'exemple de l'invention illustré avec la figure 2 et utilisant les matériaux cités comme exemples de formulation ci-dessus. Les valeurs de résistances au roulement (kg/T) et de rigidité de dérive Dz (N/°) sont ramenées en base 100 pour le témoin R et exprimées en valeur relative par rapport à la base 100 pour les pneumatiques selon l'invention. La mesure de rigidité de dérive d'un pneumatique permet d'évaluer le comportement routier d'un véhicule par sa capacité à réagir lors d'une sollicitation au volant ou à prendre la trajectoire d'un virage. Cette rigidité de dérive est est effectuée à 80% de la charge nominale (load index) et est mesurée sur appareillage et consiste à faire rouler un pneumatique monté sur jante et gonflé à une pression nominale sur une bande métallique adhérisée, au moyen d'une machine de type « Flat Track ». La mesure s'effectue lorsque le pneumatique roule à 80km/h avec un enchaînement de sollicitations faisant varier les conditions de charge, de dérive et de carrossage. La résistance au roulement peut être mesurée conformément à la norme ISO28580.

### Résultats

| Pneumatique | Résistance au roulement (Kg/T) | Rigidité de dérive Dz (dan/°) |
|---|---|---|
| R | 5,51 | 164 |
| T1 | 5,3 | 187,7 |
| T2 | 5,6 | 195 |

On note que l'invention permet un déplacement du compromis de performances entre résistance au roulement et rigidité de dérive ; elle permet une amélioration très significative de la rigidité de dérive et une légère amélioration de la résistance au roulement (exemple T1) ou une forte amélioration de la rigidité de dérive au prix d'une dégradation de la résistance au roulement tout à fait acceptable.

## Revendications

1. Pneumatique ayant un axe de rotation et un plan médian (CP) perpendiculaire à l'axe de rotation, et comprenant :
• une armature de sommet (5),
• une bande de roulement (6) radialement à l'extérieur de l'armature de sommet (5), et axialement entre deux épaules (60), la bande de roulement (6) comprenant une face de contact (61) destinée à venir en contact avec la chaussée pendant le roulage du pneumatique, la bande de roulement (6) comportant des blocs de sculpture (63) séparés par une pluralité de sillons (62) orientés essentiellement circonférentiellement, chaque sillon (62) présentant un fond de sillon (620), la bande de roulement (6) étant constituée majoritairement par au moins un mélange caoutchouteux de rigidité M donnée,
• une sous-couche (7, 71, 72, 73, 74) disposée radialement extérieurement à l'armature de sommet (5) et radialement intérieurement à la bande de roulement (6), la sous-couche affleurant à chaque fond de sillon (620), la sous-couche étant constituée par au moins un mélange caoutchouteux de rigidité A donnée ;
• la rigidité d'un mélange caoutchouteux étant définie par le module dynamique de cisaillement mesuré à 23°C, sous une contrainte de cisaillement alterné à une fréquence de 10 Hz et à 10% de déformation,
**caractérisé en ce que**, d'un côté au moins axialement par rapport au plan médian (CP), :
• chacun des sillons (62) est bordé axialement de part et d'autre par un élément renforçant (81) s'étendant radialement depuis la sous-couche (7, 71, 72, 73, 74) vers l'extérieur de la bande de roulement (6) jusqu'à une hauteur radiale supérieure à 75% de l'épaisseur radiale de la bande de roulement, ledit élément renforçant (81) étant de largeur axiale variable, depuis une valeur maximale inférieure à 30% de la largeur axiale dudit bloc de sculpture, ladite largeur axiale allant en décroissant lorsque l'on se déplace radialement vers l'extérieur, chaque élément renforçant (81) étant constitué par un mélange caoutchouteux de rigidité B donnée,
• une couche de recouvrement (80) est disposée radialement sur la sous-couche (7, 71, 72, 73, 74) et axialement recouvrant la sous-couche (7) entre les éléments renforçant (81) en dehors des sillons (62), et respectivement entre un élément renforçant (81) et l'épaule (60), ladite couche de recouvrement (80) étant constituée par le même matériau que le matériau des éléments renforçants (81),
• les rigidités obéissant aux inégalités suivantes : A < M < B.

2. Pneumatique selon la revendication 1, **caractérisé en ce que** le module dynamique de cisaillement G* du matériau de la sous-couche (7, 71, 72, 73, 74) est inférieur à 1,5 MPa, ledit module dynamique de cisaillement G* étant mesuré à 23°C, sous une contrainte de cisaillement alterné à une fréquence de 10 Hz et à 10% de déformation.

3. Pneumatique selon la revendication 2, **caractérisé en ce que** le module dynamique de cisaillement G* du matériau de la sous-couche (7, 71, 72, 73, 74) est inférieur à 0,5 MPa, ledit module dynamique de cisaillement G* étant mesuré à 23°C, sous une contrainte de cisaillement alterné à une fréquence de 10 Hz et à 10% de déformation.

4. Pneumatique selon la revendication 2, **caractérisé en ce que** la valeur de tg δ mesurée à 23°C à 10 Hz et sous une déformation de cisaillement alterné de 10% du matériau de la sous-couche (7, 71, 72, 73, 74) est inférieure à 0,3.

5. Pneumatique selon la revendication 1 ou 2, **caractérisé en ce que** la sous-couche est réalisée en deux matériaux différents (71 et 72, 73 et 74).

6. Pneumatique selon la revendication 5, l'un (72) des matériaux étant disposé axialement vers l'extérieur du pneumatique et l'autre (71) des matériaux étant disposé axialement au centre, le module dynamique de cisaillement G* du matériau de la sous-couche disposé axialement vers l'extérieur étant inférieur d'au moins 1 MPa par rapport au module dynamique de cisaillement G^{∗} du matériau de la sous-couche disposé axialement au centre, lesdits modules dynamiques de cisaillement G^{∗} étant mesurés à 23°C, sous une contrainte de cisaillement alterné à une fréquence de 10 Hz et à 10% de déformation.

7. Pneumatique selon la revendication 5, l'un (74) des matériaux étant disposé axialement sous les fonds de sillon (620), l'autre (73) des matériaux étant interposé axialement entre les fonds de sillon, en alternance avec le premier cité, le module dynamique de cisaillement G* du matériau (74) de la sous-couche disposé axialement sous les fonds de sillons (620) étant inférieur d'au moins 1 MPa par rapport au module dynamique de cisaillement G^{∗} de l'autre (73) des matériaux, lesdits modules dynamiques de cisaillement G^{∗} étant mesurés à 23°C, sous une contrainte de cisaillement alterné à une fréquence de 10 Hz et à 10% de déformation.

8. Pneumatique selon l'une des revendications 1 à 6, **caractérisé en ce que** le module dynamique de cisaillement G^{∗} du matériau de la couche de recouvrement (80) et des éléments de renforcement (81) est supérieur à 7 MPa, ledit le module dynamique de cisaillement G^{∗} étant mesuré à 23°C, sous une contrainte de cisaillement alterné à une fréquence de 10 Hz et à 10% de déformation.

9. Pneumatique selon la revendication 7, **caractérisé en ce que** le module dynamique de cisaillement G^{∗} du matériau de la couche de recouvrement (80) est supérieur à 12 MPa, ledit le module dynamique de cisaillement G^{∗} étant mesuré à 23°C, sous une contrainte de cisaillement alterné à une fréquence de 10 Hz et à 10% de déformation.

## Patentansprüche

1. Reifen mit einer Rotationsachse und einer senkrecht zur Rotationsachse verlaufenden Mittelebene (CP) und umfassend:
• eine Scheitelbewehrung (5),
• einen Laufstreifen (6) radial außerhalb der Scheitelbewehrung (5) und axial zwischen zwei Schultern (60), wobei der Laufstreifen (6) eine Kontaktfläche (61) umfasst, die dazu bestimmt ist, während des Rollens des Reifens mit der Fahrbahn in Kontakt zu gelangen, wobei der Laufstreifen (6) Profilblöcke (63) beinhaltet, die durch eine Mehrzahl von im Wesentlichen umfänglich ausgerichteten Rillen (62) getrennt sind, wobei jede Rille (62) einen Rillenboden (620) aufweist, wobei der Laufstreifen (6) mehrheitlich aus mindestens einer Kautschukmischung mit einer gegebenen Steifigkeit M besteht,
• eine Unterschicht (7, 71, 72, 73, 74), die radial außerhalb der Scheitelbewehrung (5) und radial innerhalb des Laufstreifens (6) angeordnet ist, wobei die Unterschicht bündig mit jedem Rillenboden (620) abschließt, wobei die Unterschicht aus mindestens einer Kautschukmischung mit einer gegebenen Steifigkeit A besteht;
• wobei die Steifigkeit einer Kautschukmischung durch den bei 23°C unter einer Scherwechselbeanspruchung bei einer Frequenz von 10 Hz und bei 10 % Verformung gemessenen dynamischen Schermodul definiert wird, **dadurch gekennzeichnet, dass** auf einer Seite mindestens axial in Bezug auf die Mittelebene (CP):
• jede der Rillen (62) axial beidseits durch ein Verstärkungselement (81) gesäumt wird, das sich von der Unterschicht (7, 71, 72, 73, 74) aus radial zur Außenseite des Laufstreifens (6) hin bis in eine radiale Höhe von mehr als 75 % der radialen Dicke des Laufstreifens erstreckt, wobei das Verstärkungselement (81) eine variable axiale Breite hat, von einem Maximalwert von weniger als 30 % der axialen Dicke des Profilblocks aus, wobei die axiale Breite radial nach außen hin abnimmt, wobei jedes Verstärkungselement (81) aus einer Kautschukmischung mit einer gegebenen Steifigkeit B besteht,
• wobei eine Deckschicht (80) radial auf der Unterschicht (7, 71, 72, 73, 74) und axial die Unterschicht (7) bedeckend zwischen den Verstärkungselementen (81) außerhalb der Rillen (62) und jeweils zwischen einem Verstärkungselement (81) und der Schulter (60) angeordnet ist, wobei die Deckschicht (80) aus demselben Material wie dem Material der Verstärkungselemente (81) besteht,
• wobei die Steifigkeiten die folgenden Ungleichungen erfüllen: A < M < B.

2. Reifen nach Anspruch 1, **dadurch gekennzeichnet, dass** der dynamische Schermodul G* des Materials der Unterschicht (7, 71, 72, 73, 74) kleiner als 1,5 MPa ist, wobei der dynamische Schermodul G* bei 23 °C unter einer Scherwechselbeanspruchung bei einer Frequenz von 10 Hz und bei 10 % Verformung gemessen wird.

3. Reifen nach Anspruch 2, **dadurch gekennzeichnet, dass** der dynamische Schermodul G* des Materials der Unterschicht (7, 71, 72, 73, 74) kleiner als 0,5 MPa ist, wobei der dynamische Schermodul G* bei 23 °C unter einer Scherwechselbeanspruchung bei einer Frequenz von 10 Hz und bei 10 % Verformung gemessen wird.

4. Reifen nach Anspruch 2, **dadurch gekennzeichnet, dass** der bei 23 °C bei 10 Hz und unter einer Scherwechselverformung von 10 % gemessene Wert von tg δ des Materials der Unterschicht (7, 71, 72, 73, 74) kleiner als 0,3 ist.

5. Reifen nach Anspruch 1 oder 2, **dadurch gekennzeichnet, dass** die Unterschicht aus zwei verschiedenen Materialien (71 und 72, 73 und 74) ausgeführt ist.

6. Reifen nach Anspruch 5, wobei das eine (72) der Materialien axial zur Außenseite des Reifens hin angeordnet ist und wobei das andere (71) der Materialien axial im Zentrum angeordnet ist, wobei der dynamische Schermodul G^{∗} des axial zur Außenseite hin angeordneten Materials der Unterschicht um mindestens 1 MPa kleiner als der dynamische Schermodul G^{∗} des axial im Zentrum angeordneten Materials der Unterschicht ist, wobei die dynamischen Schermodule G^{∗} bei 23 °C unter einer Scherwechselbeanspruchung bei einer Frequenz von 10 Hz und bei 10 % Verformung gemessen werden.

7. Reifen nach Anspruch 5, wobei das eine (74) der Materialien axial unter den Rillenböden (620) angeordnet ist, wobei das andere (73) der Materialien axial zwischen die Rillenböden, im Wechsel mit dem Erstgenannten, gesetzt ist, wobei der dynamische Schermodul G^{∗} des axial unter den Rillenböden (620) angeordneten Materials (74) der Unterschicht um mindestens 1 MPa kleiner als der dynamische Schermodul G^{∗} des anderen (73) der Materialien ist, wobei die dynamischen Schermodule G^{∗} bei 23 °C unter einer Scherwechselbeanspruchung bei einer Frequenz von 10 Hz und bei 10 % Verformung gemessen werden.

8. Reifen nach einem der Ansprüche 1 bis 6, **dadurch gekennzeichnet, dass** der dynamische Schermodul G^{∗} des Materials der Deckschicht (80) und der Verstärkungselemente (81) größer als 7 MPa ist, wobei der dynamische Schermodul G* bei 23 °C unter einer Scherwechselbeanspruchung bei einer Frequenz von 10 Hz und bei 10 % Verformung gemessen wird.

9. Reifen nach Anspruch 7, **dadurch gekennzeichnet, dass** der dynamische Schermodul G* des Materials der Deckschicht (80) größer als 12 MPa ist, wobei der dynamische Schermodul G* bei 23 °C unter einer Scherwechselbeanspruchung bei einer Frequenz von 10 Hz und bei 10 % Verformung gemessen wird.

## Claims

1. Tyre having an axis of rotation and a median plane (CP) perpendicular to the axis of rotation, and comprising:
• a crown reinforcement (5),
• a tread (6) radially on the outside of the crown reinforcement (5), and axially between two shoulders (60), the tread (6) comprising a contact face (61) intended to come into contact with the roadway while the tyre is being driven on, the tread (6) having a plurality of furrows (62) oriented substantially circumferentially, each furrow (62) having a furrow bottom (620), the tread (6) being primarily made up of at least one rubber compound of given stiffness M,
• a sub-layer (7, 71, 72, 73, 74) disposed radially on the outside of the crown reinforcement (5) and radially on the inside of the tread (6), the sub-layer being flush with each furrow bottom (620), the sub-layer being made up of at least one rubber compound of given stiffness A,
• the stiffness of a rubber compound being defined by the dynamic shear modulus measured at 23°C, under an alternating shear stress at a frequency of 10 Hz and at 10% deformation,
**characterized in that**, at least on one side axially with respect to the median plane (CP):
• each of the furrows (62) is bordered axially on either side by a reinforcing element (81) that extends radially from the sub-layer (7, 71, 72, 73, 74) towards the outside of the tread (6) to a radial height greater than 75% of the radial thickness of the tread, said reinforcing element (81) having a variable axial width, from a maximum value of less than 30% of the axial width of said tread block, said axial width decreasing radially upwardly, each reinforcing element (81) being made up of a rubber compound of given stiffness B,
• a covering layer (80) is disposed radially on the sub-layer (7, 71, 72, 73, 74) and axially covering the sub-layer (7) between the reinforcing elements (81) away from the furrows (62), and in each case between a reinforcing element (81) and the shoulder (60), said covering layer (80) being made up of the same material as the material of the reinforcing elements (81),
• the stiffnesses satisfying the following inequalities: A < M < B.

2. Tyre according to Claim 1, **characterized in that** the dynamic shear modulus G* of the material of the sub-layer (7, 71, 72, 73, 74) is less than 1.5 MPa; said dynamic shear modulus G* being measured at 23° C, under alternating shear stress at a frequency of 10 Hz and at 10% deformation.

3. Tyre according to Claim 2, **characterized in that** the dynamic shear modulus G* of the material of the sub-layer (7, 71, 72, 73, 74) is less than 0.5 MPa; said dynamic shear modulus G^{∗} being measured at 23° C, under alternating shear stress at a frequency of 10 Hz and at 10% deformation.

4. Tyre according to Claim 2, **characterized in that** the tg δ value measured at 23°C at 10 Hz and under an alternating shear deformation of 10% of the material of the sub-layer (7, 71, 72, 73, 74) is less than 0.3.

5. Tyre according to Claim 1 or 2, **characterized in that** the sub-layer is made of two different materials (71 and 72, 73 and 74).

6. Tyre according to Claim 5, wherein one (72) of the materials is disposed axially towards the outside of the tyre and the other (71) of the materials is disposed axially at the centre, the dynamic shear modulus G^{∗} of the material of the sub-layer disposed axially towards the outside being at least 1 MPa less than the dynamic shear modulus G^{∗} of the material of the sub-layer disposed axially at the centre; said dynamic shear moduli G^{∗} being measured at 23° C, under alternating shear stress at a frequency of 10 Hz and at 10% deformation.

7. Tyre according to Claim 5, wherein one (74) of the materials is disposed axially under the furrow bottoms (620) and the other (73) of the materials is interposed axially between the furrow bottoms, alternating with the first-mentioned material, the dynamic shear modulus G^{∗} of the material (74) of the sub-layer disposed axially under the furrow bottoms (620) being at least 1 MPa less than the dynamic shear modulus G^{∗} of the other (73) of the materials; said dynamic shear moduli G^{∗} being measured at 23° C, under alternating shear stress at a frequency of 10 Hz and at 10% deformation.

8. Tyre according to one of Claims 1 to 6, **characterized in that** the dynamic shear modulus G^{∗} of the material of the covering layer (80) and of the reinforcing elements (81) is greater than 7 MPa; said dynamic shear modulus G^{∗} being measured at 23° C, under alternating shear stress at a frequency of 10 Hz and at 10% deformation.

9. Tyre according to Claim 7, **characterized in that** the dynamic shear modulus G^{∗} of the material of the covering layer (80) is greater than 12 MPa; said dynamic shear modulus G^{∗} being measured at 23° C, under alternating shear stress at a frequency of 10 Hz and at 10% deformation.
